# EUROPÄISCHE PATENTSCHRIFT

(11) **EP 2 875 761 B1**
(45) Veröffentlichungstag und Bekanntmachung des Hinweises auf die Patenterteilung: **09.01.2019**
(21) Anmeldenummer: 14193888.6
(22) Anmeldetag: 19.11.2014
(51) Int. Cl.: A47J 31/44

(54) **Kaffeeautomat**
Coffee machine
Machine à café

(30) Priorität: 20.11.2013 DE 102013223670
(43) Veröffentlichungstag der Anmeldung: 27.05.2015
(73) Patentinhaber: BSH Hausgeräte GmbH, 81739 München (DE)
(72) Erfinder: Jäger, Harald, 83349 Palling (DE); Nöth, Christoph, 84558 Tyrlaching (DE); Strobl, Robert, 83246 Unterwössen (DE)

(56) Entgegenhaltungen:
- WO-A1-2009/027054
- DE-U1-202008 008 257
- DE-U1-202009 004 756

## Beschreibung

Die vorliegende Erfindung betrifft einen Kaffeeautomaten mit einem Gehäuse und einem daran höhenverstellbar gelagerten Ausgabeschlitten gemäß dem Oberbegriff des Anspruchs 1.

Aus der WO 2009/027054 A1 ist ein gattungsgemäßer Kaffeeautomat in der Art eines Getränkebereiters mit einem an einem Gehäuse höhenverstellbar gelagerten Ausgabeschlitten bekannt, der über eine Zulaufleitung mit einem Vorratsbehälter fluidleitend verbunden ist. Am Ausgabeschlitten befestigt sind dabei ein Kaffeeauslauf sowie ein Milchschäumer, die beide gemeinsam zu Reinigungszwecken entnommen werden können. Eine Zulaufleitung für Milch in den Milch-/Kaffeeauslauf ist hingegen nicht entnehmbar und kann deshalb nur im Gerät selbst mittels entsprechender Spülfunktionen gereinigt werden.

Aus der DE 20 2008 008257 U1 ist ein Kaffeevollautomat mit einem Gehäuse und einem daran höhenverstellbar gelagerten Getränkeauslauf bekannt, dessen Getränkeauslauf über eine Milchauslaufleitung mit einem Milchvorratsbehälter verbunden ist. Die Milchauslaufleitung weist ein Kupplungsstück und ein Verbindungsstück sowie einen das Kupplungsstück und das Verbindungsstück verbindenden Schlauch auf.

Aus der DE 20 2009 004756 U1 ist eine Kaffeemaschine mit einem Gehäuse und einem Getränkeauslauf bekannt. Der Getränkeauslauf ist dabei über eine Auslaufleitung mit einer Milchaufschäumeinrichtung verbunden. Die Milchaufschäumeinrichtung weist einen Bedienknopf und eine Milchleitung auf. Der Milchaufschäumeinrichtung kann dabei Milch aus einem Milchbehältnis über die Milchleitung zugeführt werden.

Aus der EP 1 639 926 A1 ist ein Kaffeeautomat bekannt, der eine höhenverstellbare Auffangschale besitzt. Die Auffangschale ist dabei an einem Support befestigt. Über eine Verstellvorrichtung mit zumindest einer vertikal verlaufenden Zahnschiene kann ein am Support angeordneter Schieber mit einem Fortsatz formschlüssig zusammenwirken. Der Schieber ist in Richtung der Zahnschiene federbelastet und manuell entgegen der Federkraft verschiebbar. Hierdurch ist es möglich, durch eine Höhenverstellung der Auffangschale unterschiedlichste Getränkebehälter tropffrei befüllen zu können, was auch erforderlich ist, da eine Ausgabeeinrichtung, beispielsweise ein Kaffee-/Milchauslauf, starr mit einem Gehäuse des Kaffeeautomaten verbunden und damit nicht höhenverstellbar ist.

Nachteilig bei den aus dem Stand der Technik bekannten Kaffeeautomaten ist oftmals, dass zur Realisierung eines optisch ansprechenden Erscheinungsbildes Zulaufleitungen, wie beispielsweise ein Milchschlauch, nicht sichtbar verlegt sein sollen. Das nicht sichtbare Verlegen wiederum bedeutet jedoch auf der anderen Seite einen vergleichsweise hohen Montage- und Demontageaufwand, der für jede Reinigung der Zulaufleitung, insbesondere einer Milch führenden Leitung, getätigt werden muss.

Die vorliegende Erfindung beschäftigt sich daher mit dem Problem, für einen Kaffeeautomaten der gattungsgemäßen Art eine verbesserte oder zumindest eine alternative Ausführungsform anzugeben, die insbesondere die aus dem Stand der Technik bekannten Nachteile nicht mehr aufweist.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einem an sich bekannten Kaffeeautomaten mit einem Gehäuse und einem daran höhenverstellbar gelagerten Ausgabeschlitten sämtliche mit Milch in Kontakt tretende Komponenten zwischen dem Gehäuse und dem Ausgabeschlitten so auszubilden, dass diese vergleichsweise einfach vom Kaffeeautomaten abgenommen und dadurch auch vergleichsweise einfach gereinigt werden können. Hierzu weist eine Zulaufleitung eine erste Koppelstelle sowie eine zweite Koppelstelle auf, zwischen welchen ein die beiden Koppelstellen verbindender, flexibler Schlauch angeordnet ist. Die erste Koppelstelle ist dabei lösbar fest am Gehäuse und zugleich fluidleitend mit einem Vorratsbehälter verbindbar, wogegen die zweite Koppelstelle lösbar fest mit dem Ausgabeschlitten und zudem fluidleitend mit einem auf den Ausgabeschlitten aufsteckbaren Milch-/Kaffeeauslauf verbindbar ist. Nach der Herstellung eines Kaffeemischgetränks, wie beispielsweise eines Cappuccinos, können somit der Vorratsbehälter, die Zulaufleitung mit ihren beiden Koppelstellen sowie der Milch-/Kaffeeauslauf zu Reinigungszwecken einfach vom Kaffeeautomaten abgenommen werden. Eine aufwendige Demontage der Zulaufleitung, wie bei bisherigen Kaffeeautomaten erforderlich, kann hierdurch entfallen. Auch ist bei den erfindungsgemäßen Kaffeeautomaten ein separates und damit vergleichsweise einfaches Reinigen sämtlicher mit Milch in Berührung kommender Komponenten des Kaffeeautomaten möglich, da diese einfach und mit geringem Aufwand abbaubar sind und dadurch beispielsweise in einer Spülmaschine wie herkömmliches Geschirr gereinigt werden können.

Bei einer vorteilhaften Weiterbildung der erfindungsgemäßen Lösung ist die Zulaufleitung von außen nicht sichtbar hinter einer Blende und insbesondere hinter dem Milch-/Kaffeeauslauf angeordnet. Hierdurch ist es möglich, einen optisch äußerst ansprechenden Gesamteindruck zu erzeugen, da die Zulaufleitung für die Milch zum Milch-/Kaffeeauslauf für einen Benutzer des Kaffeeautomaten nicht sichtbar ist. Durch den abnehmbaren und insbesondere aufsteckbaren Milch-/Kaffeeauslauf ist es möglich, die Zulaufleitung mit ihren beiden Koppelstellen einfach am Ausgabeschlitten bzw. am Gehäuse zu montieren bzw. von diesem wieder abzunehmen, ohne dass hierfür eine aufwendige Demontage erfolgen muss. Durch das einfache Aufstecken des Milch-/Kaffeeauslaufs und damit auch durch ein einfaches Abziehen desselben werden die dahinterliegenden Bereiche leicht zugänglich, wodurch insbesondere ein bisher unter Umständen erforderliches blindes Montieren bzw. "Durchfädeln" vermieden werden kann. Die Blende kann dabei auf den Milch-/Kaffeeauslauf bzw. auf den Ausgabeschlitten aufgesteckt oder aber mittels eines Scharniers am Ausgabeschlitten gelagert sein. Rein theoretisch ist selbstverständlich auch eine einstückige bzw. einteilige Ausbildung der Blende mit dem Milch-/Kaffeeauslauf denkbar.

Erfindungsgemäß ist die erste Koppelstelle über eine Führung am Gehäuse des Kaffeeautomaten fixierbar, wobei die Führung beispielsweise in der Art einer Öffnung ausgebildet sein kann. Eine derartige Führung erleichtert eine Montage bzw. Demontage der ersten Koppelstelle am Gehäuse erheblich, da sowohl die Montage als auch die Demontage durch eine einfache Schiebe- oder Steckbewegung realisiert werden können. In gleicher oder ähnlicher Weise kann selbstverständlich auch die zweite Koppelstelle am Ausgabeschlitten fixiert werden, wobei an diesem zusätzlich eine Aufnahmeöffnung zur Aufnahme der zweiten Koppelstelle vorgesehen sein kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: einen erfindungsgemäßen Kaffeeautomaten mit angeschlossenem Vorratsbehälter und geschlossener, einen Milch-/Kaffeeauslauf überdeckenden Blende,
- Fig. 2: eine Darstellung wie in Fig. 1, jedoch bei entnommenem Vorratsbehälter,
- Fig. 3: eine Darstellung wie in Fig. 2, jedoch bei geöffneter Blende,
- Fig. 4: eine Darstellung wie in Fig. 3, jedoch bei entnommenem Milch-/Kaffeeauslauf,
- Fig. 5: eine Detaildarstellung des Ausgabeschlittens,
- Fig. 6: eine Darstellung wie in Fig. 4, jedoch mit entnommener Zulaufleitung.

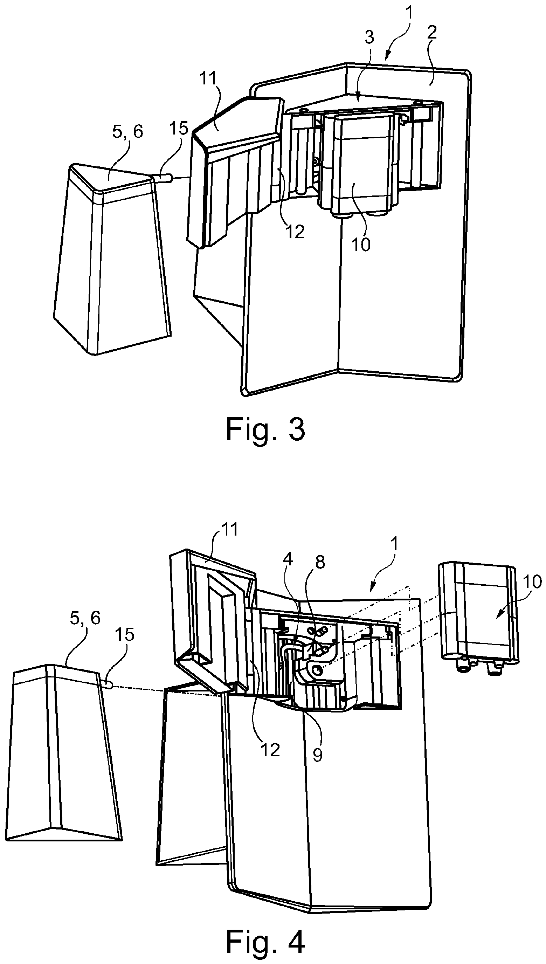

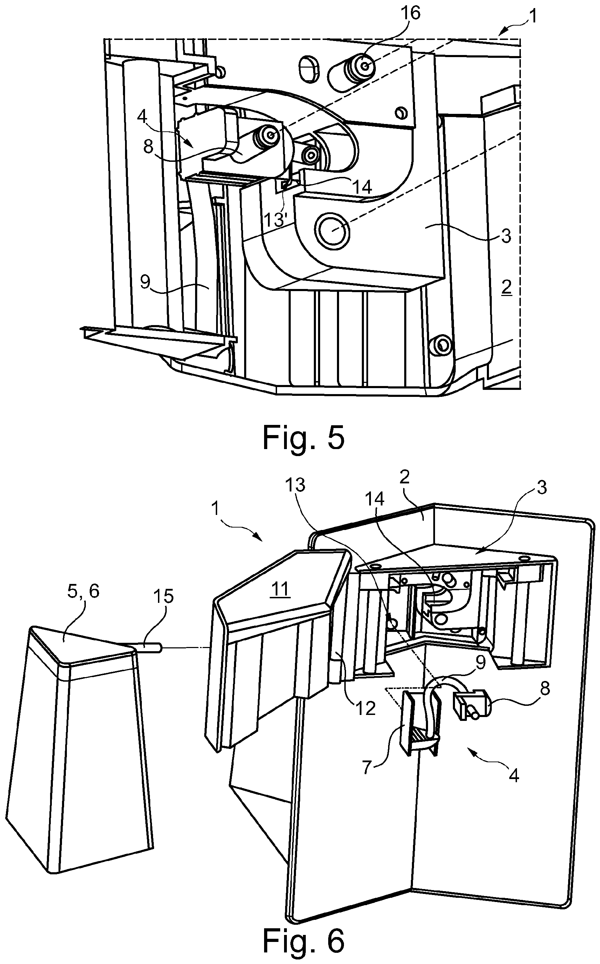

Entsprechend der Fig. 6 weist ein erfindungsgemäßer Kaffeeautomat 1 ein Gehäuse 2 mit einem daran höhenverstellbar gelagerten Ausgabeschlitten 3 auf, der über eine Zulaufleitung 4 mit einem Vorratsbehälter 5, insbesondere mit einem Milchbehälter 6, verbunden ist. Erfindungsgemäß weist nun die Zulaufleitung 4 eine erste Koppelstelle 7 sowie eine zweite Koppelstelle 8 auf, zwischen welchen ein die beiden Koppelstellen 7, 8 verbindender, flexibler Schlauch 9 angeordnet ist. Die erste Koppelstelle 7 ist dabei lösbar fest am Gehäuse 2 und zugleich fluidleitend mit dem Vorratsbehälter 5 verbindbar, wogegen die zweite Koppelstelle 8 lösbar fest mit dem Ausgabeschlitten 3 und zugleich fluidleitend mit einem auf den Ausgabeschlitten aufsteckbaren Milch-/Kaffeeauslauf 10 verbindbar ist (vgl. Fig. 4). Durch diese erfindungsgemäße Konstruktion sind der Vorratsbehälter 5, d.h. der Milchbehälter 6, die Zulaufleitung 4 samt Koppelstellen 7, 8 sowie der Milch-/Kaffeeauslauf 10 zu Reinigungszwecken leicht und einfach vom Kaffeeautomaten 1 abnehmbar und können dadurch optimal gereinigt werden. Zudem ist die Zulaufleitung 4 geschickter Weise hinter dem Milch-/Kaffeeauslauf 10 angeordnet und dadurch für einen Benutzer des Kaffeeautomaten 1 nicht sichtbar, wodurch ein hochwertiger ästhetischer Gesamteindruck erzielt werden kann.

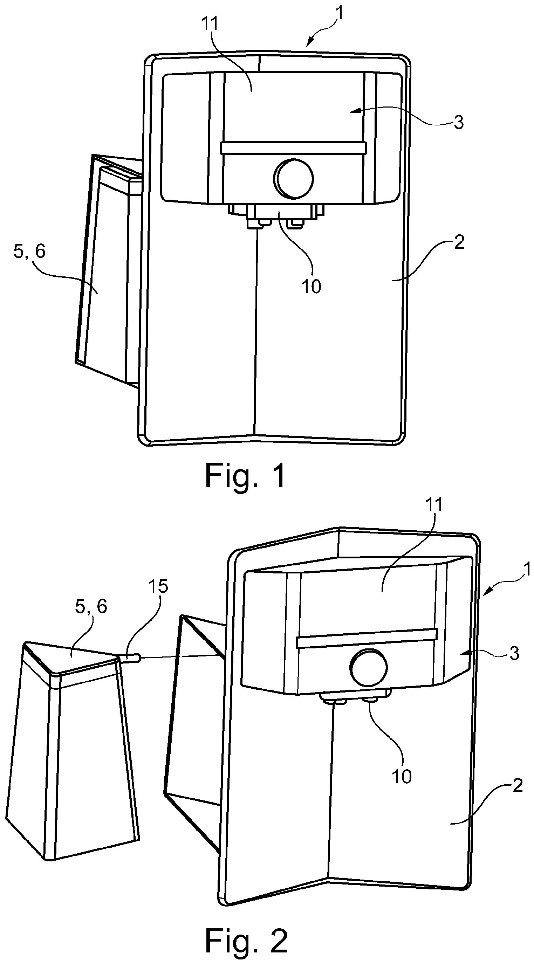

Betrachtet man die Fig. 1 bis 4 und 6, so kann man zudem eine Blende 11 erkennen, die den Milch-/Kaffeeauslauf 10 in geschlossenem Zustand abdeckt, wobei diese Blende 11 beispielsweise mittels eines Scharniers 12 gelenkig am Ausgabeschlitten 3 angebunden sein kann.

Um eine Montage und Demontage der Zulaufleitung 4 weiter zu erleichtern, ist die erste Koppelstelle 7 über eine Führung 13 am Gehäuse 2 des Kaffeeautomaten 1 fixierbar. Die Führung 13 kann dabei beispielsweise eine entsprechende Öffnung im Gehäuse 2 sein. Die zweite Koppelstelle 8 ist ebenfalls über eine Führung 13' am Ausgabeschlitten 3 fixierbar, wobei in diesem Fall die Führung 13' in der Art einer Aufnahmeöffnung 14 am Ausgabeschlitten 3 ausgebildet ist. Durch ein einfaches Einschieben der zweiten Koppelstelle 8 in die Aufnahmeöffnung 14 lässt sich somit die zweite Koppelstelle 8 am Ausgabeschlitten 3 fixieren. Auch eine Demontage der zweiten Koppelstelle 8 ist dadurch vergleichsweise einfach möglich. Ist die zweite Koppelstelle 8 der Zulaufleitung 4 am Ausgabeschlitten 3 montiert, so kann von vorne (vgl. Fig. 4) in einfacher Weise der Milch-/Kaffeeauslauf 10 aufgesteckt und fluidleitend mit der Zulaufleitung 4 verbunden werden. Bei am Gehäuse 2 montierter erster Koppelstelle 7 kann der Vorratsbehälter 5 in eine entsprechende Öffnung in das Gehäuse 2 des Kaffeeautomaten 1 eingeschoben werden, wobei in eingeschobenem Zustand der Vorratsbehälter 5, d.h. der Milchbehälter 6, über einen Anschluss 15 fluidleitend mit der ersten Koppelstelle 7 verbunden ist.

Mittels des erfindungsgemäßen Kaffeeautomaten 1 lässt sich eine Reinigung desselben, insbesondere eine Reinigung der Zulaufleitung 4, besonders einfach bewerkstelligen, was im Folgenden genauer beschrieben wird. Zudem ist die gesamte Zulaufleitung 4 im Ausgabeschlitten 3 hinter dem Milch-/Kaffeeauslauf 10 und insbesondere auch hinter einer Blende 11 angeordnet, so dass die gesamte Zulaufleitung 4 bei der Benutzung des Kaffeeautomaten 1 für einen Benutzer nicht sichtbar ist.

Die Demontage der Zulaufleitung 4 bzw. der mit Milch in Berührung kommenden Komponenten des Kaffeeautomaten 1 erfolgt dabei wie folgt:
Zunächst befindet sich der Kaffeeautomat 1 in dem gemäß der Fig. 1 dargestellten Zustand, also beispielsweise am Ende eines Kaffeezubereitungsprozesses. Gemäß der Fig. 2 wird dann der Vorratsbehälter 5, d.h. der Milchbehälter 6, aus dem Gehäuse 2 des Kaffeeautomaten 1 entfernt, wodurch der Anschluss 15 des Vorratsbehälters 5 von der ersten Koppelstelle 7 der Zulaufleitung 4 getrennt wird. Gemäß der Fig. 3 wird im sich daran anschließenden Verfahrensschritt die Blende 11 geöffnet und dadurch ein Zugang zum Milch-/Kaffeeauslauf 10 freigegeben, welcher nun einfach, wie in Fig. 4 dargestellt ist, vom Ausgabeschlitten 3 des Kaffeeautomaten 1 abgezogen werden kann. Hierbei löst sich der Milch-/Kaffeeauslauf 10 von der zweiten Koppelstelle 8, ebenso wie von einem Wasserzulauf 16. Die zweite Koppelstelle 8 bzw. der Wasserzulauf 16 besitzen dabei Nippel mit entsprechenden O-Ring-Dichtungen, welche dicht in entsprechende Öffnungen des Milch-/Kaffeeauslaufs 10 in bekannter Weise eingreifen.

Ist der Milch-/Kaffeeauslauf 10 vom Ausgabeschlitten 3 abgezogen, so kann die zweite Koppelstelle 8 aus der Führung 13' bzw. der Aufnahmeöffnung 14 des Ausgabeschlittens 3 herausgezogen werden. Gleichzeitig oder anschließend kann auch die erste Koppelstelle 7 vom Gehäuse 2, beispielsweise durch ein einfaches Herausziehen, gelöst werden. Dies ist gemäß der Fig. 6 dargestellt. In diesem Zustand ist die gesamte Zulaufleitung 4, d.h. die erste Koppelstelle 7, die zweite Koppelstelle 8 sowie der die beiden Koppelstellen 7, 8 verbindende Schlauch 9 entnommen und können einfach separat gereinigt werden. Selbstverständlich ist auch noch eine Trennung des Schlauches 9 von den beiden Koppelstellen 7, 8 denkbar.

Ein Zusammenbau erfolgt in umgekehrter Reihenfolge, so dass zunächst die erste Koppelstelle 7 in die Führung 13 am Gehäuse 2 eingeschoben wird, woraufhin die zweite Koppelstelle 8 in die Führung 13', d.h. in die Aufnahmeöffnung 14 des Ausgabeschlittens 3 eingeschoben wird. Die Zulaufleitung 4 ist somit bereits montiert. Anschließend kann der Milch-/Kaffeeauslauf 10 auf den Ausgabeschlitten 3 aufgesteckt werden. Nunmehr muss nur noch die Blende 11 geschlossen und der Milchbehälter 6 in das Gehäuse 2 eingeschoben und über den Anschluss 15 mit der ersten Koppelstelle 7 verbunden werden.

Mit dem erfindungsgemäßen Kaffeeautomaten 1 lässt sich insbesondere die Zulaufleitung 4 samt Koppelstellen 7, 8 und Schlauch 9 sowie der Milch-/Kaffeeauslauf 10 einfach zu Reinigungszwecken entnehmen, so dass sämtliche mit Milch in Berührung stehende Komponenten zur Reinigung entnommen werden können. Durch die erfindungsgemäße Konstruktion ist auch die Zulaufleitung 4 während des Betriebs des Kaffeeautomaten 1 nicht sichtbar, womit ein hoher ästhetischer Gesamteindruck erzielt werden kann.

### Bezugszeichenliste

- 1: Kaffeeautomat
- 2: Gehäuse
- 3: Ausgabeschlitten
- 4: Zulaufleitung
- 5: Vorratsbehälter
- 6: Milchbehälter
- 7: erste Koppelstelle
- 8: zweite Koppelstelle
- 9: Schlauch
- 10: Milch-/Kaffeeauslauf
- 11: Blende
- 12: Scharnier
- 13: Führung
- 14: Aufnahme
- 15: Anschluss
- 16: Wasserzulauf

## Patentansprüche

1. Kaffeeautomat (1) mit einem Gehäuse (2) und einem daran höhenverstellbar gelagerten Ausgabeschlitten (3), der über eine Zulaufleitung (4) mit einem Vorratsbehälter (5), insbesondere mit einem Milchbehälter (6), verbunden ist, wobei
die Zulaufleitung (4) eine erste Koppelstelle (7) und eine zweite Koppelstelle (8) aufweist sowie einen die erste und zweite Koppelstelle (7,8) verbindenden flexiblen Schlauch (9), wobei die erste Koppelstelle (7) lösbar fest am Gehäuse (2) und fluidleitend mit dem Vorratsbehälter (5) und die zweite Koppelstelle (8) lösbar fest mit dem Ausgabeschlitten (3) und fluidleitend mit einem auf den Ausgabeschlitten (3) aufsteckbaren Milch-/Kaffeeauslauf (10) verbindbar ist, so dass der Vorratsbehälter (5), die Zulaufleitung (4) samt Koppelstellen (7,8) und der Milch-/Kaffeeauslauf (10) zu Reinigungszwecken vom Kaffeeautomaten (1) abnehmbar sind, **gekennzeichnet dadurch, dass**
die erste Koppelstelle (7) über eine Führung (13) am Gehäuse (2) des Kaffeeautomaten (1) fixierbar ist.

2. Kaffeeautomat nach Anspruch 1, **dadurch gekennzeichnet, dass** die Zulaufleitung (4) von außen nicht sichtbar hinter einer Blende (11) und insbesondere hinter dem Milch-/Kaffeeauslauf (10) angeordnet ist.

3. Kaffeeautomat nach Anspruch 1 oder 2, **dadurch gekennzeichnet, dass** die Führung (13) als Gehäuseöffnung ausgebildet ist.

4. Kaffeeautomat nach einem der Ansprüche 1 bis 3, **dadurch gekennzeichnet, dass** die zweite Koppelstelle (8) über eine Führung (13') an dem Ausgabeschlitten (3) fixierbar ist.

5. Kaffeeautomat nach Anspruch 4, **dadurch gekennzeichnet, dass** die Führung (13') eine Aufnahmeöffnung (14) aufweist, über welche die zweite Koppelstelle (8) in den Ausgabeschlitten (3) einschiebbar ist.

6. Kaffeeautomat nach einem der Ansprüche 1 bis 5, **dadurch gekennzeichnet, dass** der Milch-/Kaffeeauslauf (10) in auf den Ausgabeschlitten (3) aufgestecktem Zustand fluiddicht mit der zweiten Koppelstelle (8) verbunden ist.

7. Kaffeeautomat nach einem der Ansprüche 2 bis 6, **dadurch gekennzeichnet, dass** die Blende (11) schwenkbar am Ausgabeschlitten (3) angeordnet ist.

## Claims

1. Coffee machine (1) having a housing (2) and an output carriage (3) height-adjustably mounted thereon which is connected via a feed line (4) to a reservoir (5), in particular to a milk container (6), wherein the feed line (4) has a first coupling point (7) and a second coupling point (8) as well as a flexible hose (9) connecting the first and second coupling points (7, 8), wherein the first coupling point (7) can be detachably fixedly connected to the housing (2) and in a fluid-conducting manner to the reservoir (5), and the second coupling point (8) can be detachably fixedly connected to the output carriage (3) and in a fluid-conducting manner to a milk/coffee outlet (10) that can be inserted into the output carriage (3), such that the reservoir (5), the feed line (4) including coupling points (7, 8) and the milk/coffee outlet (10) can be removed from the coffee machine (1) for cleaning purposes, **characterised in that** the first coupling point (7) can be fixed to the housing (2) of the coffee machine (1) via a guide (13).

2. Coffee machine according to claim 1, **characterised in that** the feed line (4) is arranged behind a panel (11) so that it is not visible from the outside, and in particular behind the milk/coffee outlet (10).

3. Coffee machine according to claim 1 or 2, **characterised in that** the guide (13) is designed as a housing opening.

4. Coffee machine according to one of claims 1 to 3, **characterised in that** the second coupling point (8) can be fixed to the output carriage (3) via a guide (13').

5. Coffee machine according to claim 4, **characterised in that** the guide (13') has a receiving opening (14) via which the second coupling point (8) can be inserted into the output carriage (3).

6. Coffee machine according to one of claims 1 to 5, **characterised in that** the milk/coffee outlet (10) is connected in a fluid-tight manner to the second coupling point (8) when inserted into the output carriage (3).

7. Coffee machine according to one of claims 2 to 6, **characterised in that** the panel (11) is arranged pivotably on the output carriage (3).

## Revendications

1. Machine à café (1) avec un boîtier (2) et un support coulissant de distribution (3) monté sur le boîtier de manière à pouvoir être ajusté en hauteur, lequel support coulissant est relié par le biais d'une conduite d'admission (4) à un réservoir (5), en particulier à un récipient à lait (6), dans lequel la conduite d'admission (4) présente un premier point de couplage (7) et un deuxième point de couplage (8) ainsi qu'un tuyau flexible (9) reliant le premier et le deuxième point de couplage (7, 8), dans lequel le premier point de couplage (7) peut être relié de manière amovible et fixe au niveau du boîtier (2) et en communication de fluide avec le réservoir (5) et le deuxième point de couplage (8) peut être relié de manière amovible et fixe au support coulissant de distribution (3) et en communication de fluide à une sortie de lait/café (10) qui peut être mise sur le support coulissant de distribution (3), de sorte que le réservoir (5), la conduite d'admission (4) y compris les points de couplage (7, 8) et la sortie de lait/café (10) peuvent être retirés de la machine à café (1) à des fins de nettoyage, **caractérisée en ce que** le premier point de couplage (7) peut être fixé au boîtier (2) de la machine à café (1) par le biais d'un guide (13).

2. Machine à café selon la revendication 1, **caractérisée en ce que** la conduite d'admission (4) est disposée depuis l'extérieur de manière à ne pas être visible derrière un capot (11) et en particulier derrière la sortie de lait/café (10).

3. Machine à café selon la revendication 1 ou 2, **caractérisée en ce que** le guide (13) est réalisé en tant qu'ouverture de boîtier.

4. Machine à café selon l'une des revendications 1 à 3, **caractérisée en ce que** le deuxième point de couplage (8) peut être fixé au support coulissant de distribution (3) par le biais d'un guide (13').

5. Machine à café selon la revendication 4, **caractérisée en ce que** le guide (13') présente une ouverture de réception (14) par le biais de laquelle le deuxième point de couplage (8) peut être introduit dans le support coulissant de distribution (3).

6. Machine à café selon l'une des revendications 1 à 5, **caractérisée en ce que** la sortie de lait/café (10) est reliée de manière étanche aux fluides au deuxième point de couplage (8) à l'état mis sur le support coulissant de distribution (3).

7. Machine à café selon l'une des revendications 2 à 6, **caractérisée en ce que** le capot (11) est disposé de manière pivotante au niveau du support coulissant de distribution (3).
